Europäisches Patentamt

European Patent Office

Office européen des brevets

(19)

(11) Veröffentlichungsnummer: **0 060 923
B1**

(12) **EUROPÄISCHE PATENTSCHRIFT**

(45) Veröffentlichungstag der Patentschrift:
13.02.85

(51) Int. Cl.⁴: **B 66 C 13/46**, B 65 G 67/60

(21) Anmeldenummer: 81108725.3

(22) Anmeldetag: 22.10.81

(54) Einrichtung zum Betrieb eines Greiferkrans einer Verladebrücke zum Be- oder Entladen eines Schiffes.

(30) Prioritat: 13.03.81 DE 3109784

(43) Veröffentlichungstag der Anmeldung:
29.09.82 Patentblatt 82/39

(45) Bekanntmachung des Hinweises auf die Patenterteilung:
13.02.85 Patentblatt 85/7

(84) Benannte Vertragsstaaten:
AT BE CH DE GB IT LI NL SE

(56) Entgegenhaltungen:
DD - A - 141 295
DE - B - 1 082 837
DE - C - 2 642 181

Patent Abstracts of Japan Band 4, Nr. 128, 9. Sepetmber 1980 Seite 8M31
SIEMENS POWER ENGINEERING, Band 1, Nr. 6, 1979
Berlin A. AXMANN "Automation of Ship Unloaders"
Seiten 191 bis 195

(73) Patentinhaber: **Siemens Aktiengesellschaft, Berlin und München Wittelsbacherplatz 2, D-8000 München 2 (DE)**

(72) Erfinder: **Axmann, Arnold, Ebrardstrasse 38 1/3, D-8520 Erlangen (DE)**

## Beschreibung

Die Erfindung betrifft eine Einrichtung zum Betrieb eines Greiferkranes einer Verladebrücke zum Beladen eines Schiffes mit Schüttgut oder zum Entladen von Schüttgut aus einem Schiff, mit einem Videoempfänger, auf dessen Bildschirm die Istposition des Greifers innerhalb eines die zulässigen Sollpositionen begrenzenden Arbeitsbereiches maßstabgerecht angezeigt wird.

Aus der DE-B-1 082 837 ist eine Einrichtung zur Fernanzeige des Standortes einer Greiferbrücke und einer Greiferkatze mit Hilfe einer Fernsehkamera und eines Fernsehbildschirmes bekannt. Hier wird die Istposition der Katze durch eine leuchtende horizontale Linie dargestellt, die z. B. durch eine Leuchtstofflampe gebildet ist, welche an einem im Sichtfeld der Kamera liegenden Schild der Katze angeordnet ist und innerhalb vorgegebener Markierungen auf dem Bildschirm dargestellt wird. Dem Kranführer fällt die Aufgabe zu, die Katze so zu verfahren, daß auf dem Bildschirm die horizontale Linie in einem bestimmten Skalenbereich liegt. Auf der Länge der horizontalen Linie wird auf die Istposition des Greifers geschlossen.

Ferner ist in der DE-C3-2 642 181 und in Siemens Power Engineering, Band 1, Nr. 6, 1979, Berlin, A. Axmann »Automation of Ship Unloaders«, Seiten 191 bis 195, eine Einrichtung zur Anzeige der Greiferposition mittels eines Anzeigeschirmes beschrieben, der in eine Vielzahl von je zwei Leuchtdioden enthaltenden Feldern aufgeteilt ist. Jeweils eine der beiden Leuchtdioden wird von einem Sollwertgeber und die andere Leuchtdiode durch einen Istwertgeber angesteuert, so daß die Soll- und Istpositionen des Greifers durch je einen mit der Bewegung des Greifers über den Anzeigeschirm wandernden Lichtpunkt dargestellt sind. Zur Einleitung des Belade- bzw. Entladevorganges setzt der Kranführer den Greifer durch Handsteuerung auf das Schüttgut auf und richtet der angezeigten Istposition entsprechend eine Schablone, die dem Querschnitt des Schiffrumpfes maßstabgetreu entspricht, auf dem Anzeigeschirm aus. Dadurch erhält der Kranführer die Möglichkeit, die jeweils für die Entladung zulässigen Sollwerte innerhalb der Schablone vorzugeben, d. h. die Schablone zeigt den zulässigen Bereich für die Sollwertvorgabe. Der jeweils vorgegebene Ausgangssollwert wird für mehrere durch einen Leitlinienrechner gesteuerte Greiferspiele beibehalten. Eine Einrichtung zu Leitliniensteuerung ist beispielsweise aus der DD-A-141 295 und Patent Abstracts of Japan, Band 4, Nr. 129, 9. 09. 1980, Seite 8 M 31 und JP-A-55-84 728 bekannt. Durch das einmalige Anfahren einer Zielposition und die davon abhängige Ausrichtung der Schablone auf dem Anzeigeschirm läßt sich der Arbeitsbereich des Greifers nicht genau genug festlegen, so daß Kollisionen des Greifers mit den Schiffslukenkanten nicht auszuschließen sind.

Der Erfindung liegt die Aufgabe zugrunde, eine Einrichtung zu schaffen, die eine maßstabgerechte Abgrenzung des zulässigen Arbeitsbereiches des Greifers auf dem Bildschirm ermöglicht und durch die eine Kollision des Greifers mit Aufbauten des Schiffes selbsttätig vermieden wird.

Gemäß der Erfindung wird diese Aufgabe dadurch gelöst, daß die Lukenkanten des Schiffes als Balken, deren oberes Ende in horizontaler und vertikaler Richtung durch die in je einen Istwertspeicher gesetzten, durch Anfahren der land- und wasserseitigen Lukenkanten des Schiffes mit geöffnetem Greifer ermittelten Istwerte fixiert ist, und der Greifer auf dem Bildschirm des Empfängers abgebildet sind und daß die gespeicherten Istwerte und die für die Horizontal- und Vertikalbewegung jeweils von Hand oder von einem Leitlinienrechner vorgegebenen Sollwerte Vergleichern zugeführt sind, deren Ausgangssignal den Antrieb des Katzfahrwerkes und des Haltewerkes bei Vorgabe von die gespeicherten Istwerte überschreitenden Sollwerten abschaltet. Vorteilhafterweise sind auf dem Bildschirm des Empfängers die jeweils vorgegebenen Sollwerte bzw. die angewählte Leitlinie abgebildet. Die Lage des Abbildes des geöffneten bzw. geschlossenen Greifers auf dem Bildschirm ist von den dem Empfänger zugeführten Istwerten für die Horizontal- und die Vertikalbewegung des Greifers abhängig.

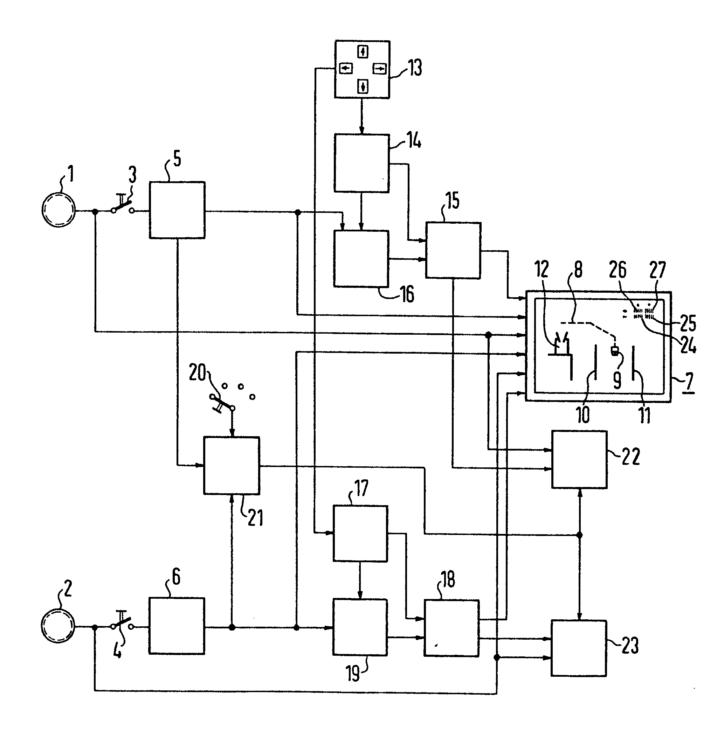

Anhand eines in der Zeichnung dargestellten Ausführungsbeispieles wird die Erfindung im folgenden näher erläutert.

An den Antrieb des Katzfahrwerkes einer nicht dargestellten Verladebrücke ist ein Weggeber 1 gekuppelt, dessen Ausgangssignal als Istwert des Katzfahrwerkes unmittelbar einem Videoempfänger 7 und einer Wegregeleinrichtung 22 zugeführt und über einen Taster 3 in einen Istwertspeicher 5 setzbar ist. In gleicher Weise ist das Ausgangssignal eines an den Antrieb des Haltewerkes des Greifers gekuppelten Weggebers 2 dem Empfänger 7 und einer Wegregeleinrichtung 23 unmittelbar zugeführt und über einen Taster 4 in einen Istwertspeicher 6 setzbar. Der Ausgang der beiden Istwertspeicher ist an einem weiteren Istwerteingang des Empfängers, an einem gemeinsamen ersten Vergleicher 21 und an je einem zweiten Vergleicher 16 bzw. 19 angeschlossen. Die Vergleicher 16 und 19 vergleichen den gespeicherten Istwert des Katzfahrweges bzw. der Vertikalbewegung des Greifers mit dem Zählerstand eines Sollwertzählers 14 bzw. 17. Beide Sollwertzähler sind an einen Sollwertgeber 13 angeschlossen, der von Hand und wahlweise durch ein Steuerwerk betätigt werden kann. Jedem Sollwertzähler 14, 17 ist ferner ein Sollwertspeicher 15 bzw. 18 zugeordnet, dessen Ausgangssignal dem Empfänger 7 und in Abhängigkeit vom Ausgangssignal des Vergleichers 16 bzw. 19 der Wegregeleinrichtung 22 bzw. 23 zugeführt wird. Mittels eines Wahlschalters 20 wird dem gemeinsamen Vergleicher 21 eine der in einem Rechner gespeicherten Leitlinien vorgegeben. Das Ausgangssignal dieses Vergleichers wirkt unmittelbar auf die Wegregeleinrichtungen 22 und 23.

Der Empfänger 7 enthält eine digitale Anzeigevorrichtung für die Sollwerte 24, 25 und für die Istwerte 26, 27 der Horizontalbewegung bzw. der Vertikalbewegung des Greifers, dessen im Empfänger 7 maßstabgerecht gebildetes Abbild 9 entsprechend der jeweiligen Istposition des geöffneten oder geschlossenen Greifers auf dem Bildschirm dargestellt ist. Außerdem wird im Empfänger ein maßstabgerechtes Abbild des ortsfesten, zu beladenden oder zu entladenden Bunkers 12 erzeugt. Ferner wird auf dem Bildschirm die jeweils gewählte Leitlinie 8 abgebildet. Zwei auf dem Bildschirm sichtbare »Balken« 10, 11 sind aus den gespeicherten Istwerten abgeleitet.

Zur Fixierung des zulässigen Arbeitsbereiches des Greifers im Inneren des Schiffes, dessen relative Lage zur Verladebrücke unbekannt ist und sich ändern kann, steuert der Kranführer den Greifer von Hand in der Weise, daß er den geöffneten Greifer möglichst nahe zunächst an die landseitige und dann an die wasserseitige Lukenkante des Schiffes heranführt. Die diesen Anfahrpositionen des Greifers entsprechenden Istwerte des Katzfahrweges und des Vertikalweges des Greifers setzt der Kranführer durch Betätigung der Taster 3 und 4 in die Istwertspeicher 5 bzw. 6. Durch die Ausgangssignale der Istwertspeicher wird der obere Endpunkt der Balken 10 und 11 auf dem Bildschirm und damit der zulässige Arbeitsbereich in horizontaler und vertikaler Richtung festgelegt.

Innerhalb des festgelegten Arbeitsbereiches kann der Kranführer durch entsprechende Sollwertvorgabe jeden beliebigen Punkt anwählen. Der Zählerstand des dem Sollwertgeber 13 nachgeschalteten Sollwertzählers 14 wird im Vergleicher 16 mit dem in den Speicher 5 gesetzten Istwert verglichen. Überschreitet der vom Kranführer vorgegebene Sollwert den gespeicherten Istwert, so sperrt der Vergleicher die Weitergabe des den Istwert überschreitenden Sollwertanteiles aus dem Sollwertspeicher 15 an die Wegregeleinrichtung 22 des Katzfahrwerkes. In gleicher Weise wird der Sollwertspeicher 18 gesperrt, wenn der Zählerstand des Sollwertzählers 17 den im Istwertspeicher 6 hinterlegten Wert überschreitet.

Hat der Kranführer mit Hilfe des Wahlschalters 20 eine Leitlinie vorgewählt, die beispielsweise einen der beiden Balken 10 oder 11 auf dem Bildschirm schneidet, d. h. die zu einer Kollision des Greifers mit einer Lukenkante führen würde, sperrt in analoger Weise das Ausgangssignal des Vergleichers 21, der die der Leitlinie entsprechenden Sollwerte mit den in den Speichern 5 und 6 stehenden Istwerten vergleicht, die beiden Wegregeleinrichtungen 22 und 23.

Im automatischen Betrieb übernimmt vorteilhafterweise ein Steuerwerk die Steuerung des Haltewerkes zur Bewegung des Greifers in der Vertikalen und zum Öffnen und Schließen des Greifers. Damit ist, abgesehen von der Wahl der Leitlinien, ein vollautomatischer Betrieb der Einrichtung möglich. Dabei ist vorausgesetzt, daß Pendelschwingungen des Greifers mittels einer bekannten Einrichtung gedämpft oder unterdrückt werden.

## Patentansprüche

1. Einrichtung zum Betrieb eines Greiferkranes einer Verladebrücke zum Beladen eines Schiffes mit Schüttgut oder Entladen von Schüttgut aus einem Schiff, mit einem Videoempfänger (7), auf dessen Bildschirm die Istposition des Greifers innerhalb eines die zulässigen Sollpositionen begrenzenden Arbeitsbereichs maßstabgerecht angezeigt wird, dadurch gekennzeichnet, daß die Lukenkanten des Schiffes als Balken (10, 11), deren oberes Ende in horizontaler und vertikaler Richtung durch die in je einen Istwertspeicher (5, 6) gesetzten, durch Anfahren der land- und wasserseitigen Lukenkante des Schiffes mit geöffnetem Greifer ermittelten Istwerte fixiert ist, und der Greifer auf dem Bildschirm des Empfängers (7) abgebildet sind und daß die gespeicherten Istwerte und die für die Horizontal- und Vertikalbewegung jeweils von Hand oder von einem Leitlinienrechner vorgegebenen Sollwerte Vergleichern (16, 19 bzw. 21) zugeführt sind, deren Ausgangssignal den Antrieb des Katzfahrwerkes und des Haltewerkes bei Vorgabe von die gespeicherten Istwerte überschreitenden Sollwerten abschaltet.

2. Einrichtung nach Anspruch 1, dadurch gekennzeichnet, daß auf dem Bildschirm des Empfängers (7) der jeweils vorgegebene Sollwert bzw. die angewählte Leitlinie (8) abgebildet ist.

3. Einrichtung nach Anspruch 2, dadurch gekennzeichnet, daß die Lage des Abbildes (9) des geöffneten bzw. geschlossenen Greifers auf dem Bildschirm von den dem Empfänger (7) zugeführten Weg-Istwerten für das Katzfahrwerk und das Haltewerk abhängig ist.

4. Einrichtung nach Anspruch 3, dadurch gekennzeichnet, daß der Empfänger (7) eine Vorrichtung zur digitalen Anzeige der Wegsollwerte (24, 25) und der Wegistwerte (26, 27) für das Katzfahrwerk bzw. das Haltewerk enthält.

## Claims

1. Device for the operation of a grab crane of a loading bridge for loading a ship with bulk material or unloading bulk material from a ship, with a video receiver (7), on the screen of which is displayed to correct scale the actual position of the grab within the working area limiting the permissible desired positions, characterised in that the hatch edges of the ship, represented as beams (10, 11) whose upper end is fixed in the horizontal and vertical direction by the actual values placed into a respective actual value store (5, 6) and determined by movement of the land- and waterside hatch edge of the ship with the grab opened, and the grab, are displayed on the screen of the receiver (7), and in that the stored actual values and the desired values predetermined for horizontal and vertical movement are fed to comparators (16, 19 or 21) manually or by a directrix calculator, the output signal of which comparators switches off the drive of the trolley moving gear and of the holding device when desired values are introduced which exceed the stored actual values.

2. Device according to claim 1, characterised in that on the screen of the receiver (7) there is displayed the respective predetermined desired value or the selected directrix (8).

3. Device according to claim 2, characterised in that the position of the image (9) of the open or closed grab on the screen is dependent on the actual path values fed to the receiver (7) for the trolley moving gear and the holding device.

4. Device according to claim 3, characterised in that the receiver (7) contains a device for the digital display of the desired path values (24, 25) and the actual path values (26, 27) for the trolley moving gear or the holding device.

## Revendications

1. Dispositif pour faire fonctionner une grue à benne preneuse d'un pont roulant pour le chargement d'un navire en produits en vrac ou pour décharger un produit en vrac d'un navire, comportant un récepteur vidéo (7), sur l'écran duquel la position réelle de la benne preneuse à l'intérieur d'un espace de travail limitant les positions de consigne admissible, est affichée à une échelle correcte, caractérisé par le fait que l'image des bords des écoutilles du navire est reproduite sous la forme de traits (10, 11), dont l'extrémité supérieure est fixée suivant une direction horizontale et une direction verticale par les valeurs réelles positionnées dans des mémoires respectives de valeurs réelles (5, 6) et déterminées lors du rapprochement de la benne preneuse ouverte vis-à-vis des bords, côté terre et côté mer, de l'écoutille du navire, et l'image de la benne preneuse est formée sur l'écran du récepteur (7) , et que les valeurs réelles mémorisées et les valeurs de consigne, prédéterminées manuellement ou par un calculateur de trajectoire pilote pour le déplacement horizontal et le déplacement vertical, sont envoyées à des comparateurs (16, 19 ou 21) dont le signal de sortie arrête l'entrainement du mécanisme de roulement pour le chariot et du mécanisme de maintien lors de la prédétermination de valeurs de consigne dépassant les valeurs réelles mémorisées.

2. Dispositif suivant la revendication 1, caractérisé par le fait que l'image de la valeur de consigne prédéterminée ou de la trajectoir pilote (8) sélectionnée est formée sur l'écran du récepteur (7).

3. Dispositif suivant la revendication 2, caractérisé par le fait que la position de l'image (9) de la benne preneuse ouverte ou fermée sur l'écran dépend des valeurs réelles de trajet , envojées au récepteur (7), pour le mécanisme de roulement du chariot et pour le mécanisme de maintien.

4. Dispositif suivant la revendication 3, caractérisé par le fait que le récepteur (7) contient un dispositif réalisant l'affichage numérique des valeurs de consigne (24, 25) du trajet et des valeurs réelles (26, 27) du trajet pour le mécanisme de roulement du chariot et pour le mécanisme d'arrêt.